**Europäisches Patentamt**

**European Patent Office**

**Office européen des brevets**

(19)

(11) Veröffentlichungsnummer: **0 074 500**
A2

(12) # EUROPÄISCHE PATENTANMELDUNG

(21) Anmeldenummer: **82107427.5**

(22) Anmeldetag: **16.08.82**

(51) Int. Cl.³: **G 02 F 1/133**
**B 23 K 1/20, B 32 B 15/00**
**B 23 K 35/00**

(30) Priorität: **16.09.81 DE 3136741**

(43) Veröffentlichungstag der Anmeldung:
**23.03.83 Patentblatt 83/12**

(84) Benannte Vertragsstaaten:
**FR GB NL SE**

(71) Anmelder: **VDO Adolf Schindling AG**
**Gräfstrasse 103**
**D-6000 Frankfurt/Main(DE)**

(72) Erfinder: **Nickol, Friedrich-Wilhelm**
**Am Honigbaum 35**
**D-6239 Eppstein 4(DE)**

(74) Vertreter: **Könekamp, Herbert, Dipl.-Ing.**
**Sodener Strasse 9**
**D-6231 Schwalbach(DE)**

(54) **Flüssigkristallzelle.**

(57) Bei einer Flüssigkristallzelle mit einer auf dem Glassubstrat befindlichen elektrisch leitenden Elektrodenschicht, die in vorbestimmten Bereichen mit einer lötfähigen Schicht versehen ist, die auf ihrer der Elektrodenschicht abgewandten Seite einen Lötüberzug aus Blei, Zinn oder einer Legierung beider trägt, ist dem Lötüberzug ein Anteil Gallium und/oder Wismut beigemischt. Durch diese Beimischung wird ein alterungsbeständiges Lot erhalten, das nach dem Aufbringen auf die lötfähige Schicht und Erkalten nur geringe Spannungsfelder im Schichtensystem und im Glassubstrat erzeugt.

EP 0 074 500 A2

**0074500**

VDO Adolf Schindling AG

Gräfstraße 103
6000 Frankfurt/Main

1619   G-S Kö-kl

11. Sept. 1981

## Flüssigkristallzelle

Die Erfindung bezieht sich auf eine Flüssigkristallzelle mit einer auf dem Glassubstrat befindlichen
elektrisch leitenden Elektrodenschicht, die in vorbestimmten Bereichen mit einer lötfähigen Schicht versehen ist, die auf ihrer der Elektrodenschicht abgewandten Seite einen Lotüberzug aus Blei, Zinn oder
einer Legierung beider trägt.

Bei bekannten Flüssigkristallzellen dieser Gattung
ist zwischen der leitenden Elektrodenschicht und der
lötfähigen Schicht ein Haftvermittler vorhanden, der
beispielsweise aus Chrom, Titan oder Aluminium besteht
und die lötfähige Schicht fest mit der Elektrodenschicht
elektrisch leitend verbindet. Die lötfähige Schicht ist
im allgemeinen aus Kupfer oder Eisen hergestellt. Die
lötfähige Schicht ist auf ihrer der leitenden Elektrodenschicht abgewandten Seite mit einer Diffusionssperrschicht, beispielsweise aus Palladium, Nickel oder Platin und einer darauf angeordneten Korrosionsschutzschicht, beispielsweise aus Gold überzogen. Hierauf befindet sich dann ein Lotüberzug aus Blei, Zinn oder einer Blei-Zinn-Legierung, in der sich Teile der Diffusionssperrschicht und der Korrosionsschutzschicht beim Aufbringen des Lotüberzugs lösen.

Es hat sich nun gezeigt, daß nach Aufbringen und Erkalten des Lötüberzugs sich erhebliche Spannungen in den darunterliegenden Schichten bilden, die sich, da die einzelnen übereinander angeordneten Schichten jeweils eine hohe Haftwirkung zueinander haben, sich im Glassubstrat fortsetzen, was zur Folge hat, daß bereits bei relativ geringen auf den Lotüberzug wirkenden Zug- oder Scherkräften das gesamte Schichtsystem einschließlich der elektrisch leitenden Elektrodenschicht aus dem Glassubstrat ausgerissen wird, wobei sich im Glassubstrat eine Ausreißmulde bildet, die eine wie auch immer geartete Reparatur dieser Beschädigung unmöglich macht.

Wie Versuche ergeben haben, treten diese Nachteile dann nicht auf, wenn Lotüberzüge verwendet werden, die eine im Vergleich zu den aus Blei, Zinn oder einer Legierung beider bestehenden Lotüberzügen geringere Zähigkeit aufweisen und sich beim Erkalten plastisch deformieren können. Solche Lotüberzüge bestehen beispielsweise aus Indium oder einer Legierung aus Indium und Zinn oder Blei. Diese Lötüberzüge haben jedoch den Nachteil, daß bereits bei üblichen Raumtemperaturen Kupferatome in den Lötüberzug diffundieren, so daß mit zunehmendem Alter der Flüssigkristallzelle die Haftfestigkeit des Lotüberzugs abnimmt. Dies führt bei Verwendung von Flüssigkristallzellen im Fahrzeug bei den dortigen Betriebsbedingungen dazu, daß sich mit der Zeit die angelöteten Drähte von dem Untergrund lösen können.

Diese Nachteile sollen durch die Erfindung beseitigt werden. Es ist daher Aufgabe der Erfindung einen Lötüberzug zu definieren, der einerseits ein Ausreißen des Schichtensystems aus dem Glassubstrat verhindert und andererseits eine sichere Verbindung der Anschlußdrähte am Schichtensystem über einen langdauernden Zeitraum sicherstellt.

Diese Aufgabe wird erfindungsgemäß durch einen Lötüberzug gelöst, dem Gallium oder Wismut beigemischt ist.

Wie Versuche gezeigt haben, treten bei einem solchen Lötüberzug nach seinem Erkalten nur verhältnismäßig geringe Spannungsfelder in den einzelnen darunterliegenden Schichten und im Glassubstrat selbst auf, so daß die Gefahr eines Ausreißens des Schichtensystems aus dem Glassubstrat nicht mehr besteht. Ferner hat sich gezeigt, daß auch über einen längeren Zeitraum hinweg sich die Haftfestigkeit des Lotüberzugs auf seinem Untergrund nicht verändert.

Als zweckmäßig hat es sich erwiesen, bei Verwendung von Wismut dem Lötüberzug einen Anteil zwischen 12 und 46 Volumenprozent dieses Stoffes beizumischen.

Bei Verwendung von Gallium hat es sich als zweckmäßig erwiesen, dem Lötüberzug einen Anteil zwischen 8 und 35 Volumenprozent beizumischen. Eine höhere Beimischung führt zu einer ungünstigen Beeinflussung des Schmelzpunktes der Legierung, während bei geringeren Beimischungen als angegeben sich Spannungsfelder im Glassubstrat einstellen, die zu einem Ausreißen des Schichtsystems führen können.

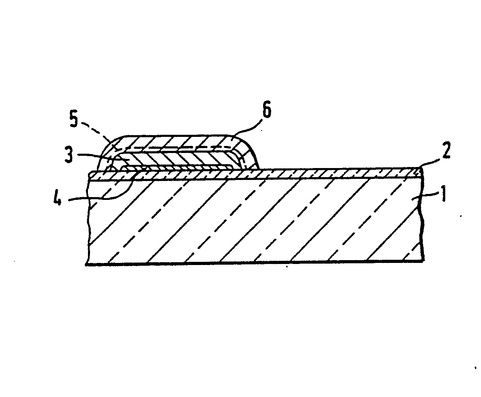

Die Erfindung sei anhand der Zeichnung, die in zum Teil schematischer Darstellung einen Querschnitt durch einen Teil einer Flüssigkristallzelle zeigt, näher erläutert.

Auf einem Glassubstrat 1 der Flüssigkristallzelle befindet sich eine elektrisch leitende Elektrodenschicht 2, die, wenn das Glassubstrat 1 die dem Betrachter zugewandte Displayfläche ist, durchsichtig ist.

An einer vorbestimmten Stelle der elektrisch leitenden Elektrodenschicht 2 ist eine lötfähige Schicht 3 aus Kupfer oder Eisen aufgebracht, zwischen der und der Elektrodenschicht 2 ein Haftvermittler 4 angeordnet ist. Dieser Haftvermittler 4, der aus Chrom oder Aluminium bestehen kann, hat die Aufgabe, die lötfähige Schicht 3 sicher mit der elektrisch leitenden Elektrodenschicht 2 zu verbinden und zwar sowohl in elektrischer als auch in mechanischer Hinsicht.

Auf die lötfähige Schicht 2 wird dann im weiteren Fertigungsablauf eine Korrosionsschutzschicht 5 aufgebracht und auf diese dann ein Lötüberzug 6. Beim Aufbringen des Lötüberzugs 6 vermischt sich dieser zumindest teilweise mit der Korrosionsschutzschicht 5. Der Lötüberzug 6 besteht aus einer Blei-Zinn-Legierung, der ein Anteil von ungefähr 35 Volumenprozent Wismut beigemischt ist.

VDO Adolf Schindling AG        Gräfstraße 103
                               6000 Frankfurt/Main

                               1619 G-S Kö-kl

                               11. Sept. 1981


Patentansprüche

1. Flüssigkristallzelle mit einer auf dem Glassubstrat befindlichen elektrisch leitenden Elektrodenschicht, die in vorbestimmten Bereichen mit
   einer lötfähigen Schicht versehen ist, die auf
   ihrer der Elektrodenschicht abgewandten Seite
   einen Lötüberzug aus Blei, Zinn oder einer Legierung beider trägt, dadurch gekennzeichnet,
   daß dem Lötüberzug (6) Gallium und/oder Wismut
   beigemischt ist.


2. Flüssigkristallzelle nach Anspruch 1, dadurch
   gekennzeichnet, daß dem Lötüberzug (6) ein Anteil zwischen 12 und 46 Volumenprozent Wismut
   beigemischt ist.


3. Flüssigkristallzelle nach Anspruch 1, dadurch
   gekennzeichnet, daß dem Lötüberzug (6) ein Anteil
   zwischen 8 und 35 Volumenprozent Gallium beigemischt ist.